Europäisches Patentamt

European Patent Office

Office européen des brevets

(11) Veröffentlichungsnummer: **0 316 516 B1**

# (12) EUROPÄISCHE PATENTSCHRIFT

(45) Veröffentlichungstag der Patentschrift: **27.11.91**

(51) Int. Cl.⁵: **G01M 17/02, B60C 25/00**

(21) Anmeldenummer: **88112772.4**

(22) Anmeldetag: **05.08.88**

(54) **Verfahren und Vorrichtung zur Reifenaufnahme, insbesondere zur Messung des Rundlaufs.**

(30) Priorität: 23.09.87 DE 3731926

(43) Veröffentlichungstag der Anmeldung:
24.05.89 Patentblatt 89/21

(45) Bekanntmachung des Hinweises auf die
Patenterteilung:
27.11.91 Patentblatt 91/48

(84) Benannte Vertragsstaaten:
AT BE CH DE ES FR GB GR IT LI LU NL SE

(56) Entgegenhaltungen:
DE-A- 3 534 619
DE-A- 3 541 188
DE-A- 3 604 023

(73) Patentinhaber: **Continental Aktiengesellschaft**
**Königsworther Platz 1**
**W-3000 Hannover 1(DE)**

(72) Erfinder: **Sergel, Horst**
**Fuchsrain 20 A**
**W-3000 Hannover 51(DE)**
Erfinder: **Aschemann, Dieter**
**Türkstrasse 8**
**W-3000 Hannover 1(DE)**
Erfinder: **Gerloff, Klaus**
**Tischbeinstrasse 5**
**W-3004 Isernhagen 2 (NB)(DE)**
Erfinder: **Kay, Alexander**
**Avenue des Lauriers 42**
**B-4920 Embourg(BE)**
Erfinder: **Wedemeyer, Lutz**
**Im Lindhofe 51**
**D-3050 Wustorf 1(BE)**

## Beschreibung

Die Erfindung betrifft ein Verfahren zur Reifenaufnahme, insbesondere bei Messung des Rundlaufs bei einem Fahrzeugluftreifen, der im Betriebszustand mit seinen Wülsten am radial inneren Umfang einer Felge befestigt ist, mit einer Meßfelge, die einen zu prüfenden Reifen an dessen axial außen liegenden Wulstzonen aufnimmt und eine Vorrichtung zur Durchführung dieses Verfahrens.

Herkömmliche Reifen, deren Wülste am radial äußeren Umfang einer Felge angeordnet sind, werden auf Rundlauf mit einer zweigeteilten Meßfelge gemessen, die von außen an den Reifen herangeführt wird. Die beiden axial gegeneinander verfahrbaren Meßfelgenteile nehmen dabei den Reifen mit seinen Wulstsitzflächen in gleicher Weise auf, wie den Fahrzeugreifen während des Fahrbetriebs. Bei einem neuentwikkelten Reifen-Felgen-System, wie es in der DE-OS 30 00 428 beschrieben ist, bei dem der Reifen mit seinen Wülsten am radial inneren Umfang der Felge angeordnet ist, besteht das Problem, daß die Meßfelge in das Innere des Reifens eingeführt werden muß, dabei jedoch einen größeren Durchmesser hat, als der Innendurchmesser des Reifens beträgt.

In der DE-OS 35 41 188 ist dazu vorgeschlagen worden, die axial verschiebbaren Felgenhälften aus mehreren radial verstellbaren Felgensegmenten aufzubauen. Eine derartige Meßfelge kann im radial zusammmgefahrenen Zustand, d.h., mit verkleinertem Durchmesser, in den einen kleineren Innendurchmesser aufweisenden Reifen einfah- ren und in Meßposition auseinander gefahren werden. Problematisch dabei ist jedoch, daß der Innenraum abgedichtet und die Reifenseitenwände aus ihrer Trapezform, in der sie geheizt werden, in den Montagezustand gebracht werden müssen.

Dazu ist in der DE-A1-3604023 vorgeschlagen worden, einen derartigen Luftreifen mit seitlich nach außen geklappten Seitenwänden und - wülsten, d.h., so wie er geheizt worden ist, auf Rundlauf zu messen. Die tatsächlichen Betriebsverhältnisse sind bei einer derartigen Vorrichtung jedoch nur bedingt reproduzierbar, und man ist nach wie vor bestrebt, Reifen in ihrer tatsächlichen Montagestellung zu messen.

Aufgabe der vorliegenden Erfindung ist es, ein Verfahren zu schaffen, mit dem Reifen der eingangs beschriebenen Art in Montagestellung geprüft werden können, sowie eine Vorrichtung, mit der dieses Verfahren durchgeführt werden kann.

Gelöst wird diese Aufgabe gemäß Anspruch 1 oder 2.

Durch diese Maßnahme wird eine Vorrichtung geschaffen, bei der die Prüffelge in herkömmlicher Weise von axial außen gegen den zu prüfenden Reifen gefahren werden kann. Dicht-und Umformprobleme treten dabei nicht auf. Der eingelegte Formring bzw. der einzulegende Drahtkern sorgen für einen sicheren und stabilen Sitz des Reifens auf der Prüffelge.

Weitere vorteilhafte Maßnahmen sind in den Unteransprüchen beschrieben. Die Erfindung ist in der beiliegenden Zeichnung dargestellt und wird nachfolgend näher beschrieben; es zeigt:

Fig. 1    den Felgenteller einer Reifenprüffelge mit der Heizformkontur angepaßten Felgenhörnern;

Fig. 2    eine Prüffelge nach der Fig. 1 mit einem aufgezogenen Reifen, der mit einem Formring in seiner Lage gehalten ist;

Fig. 3    eine Prüffelge nach der Fig. 1 mit Wulstansätzen am Reifen zur Sicherung an den Felgenhörnern der Prüffelge.

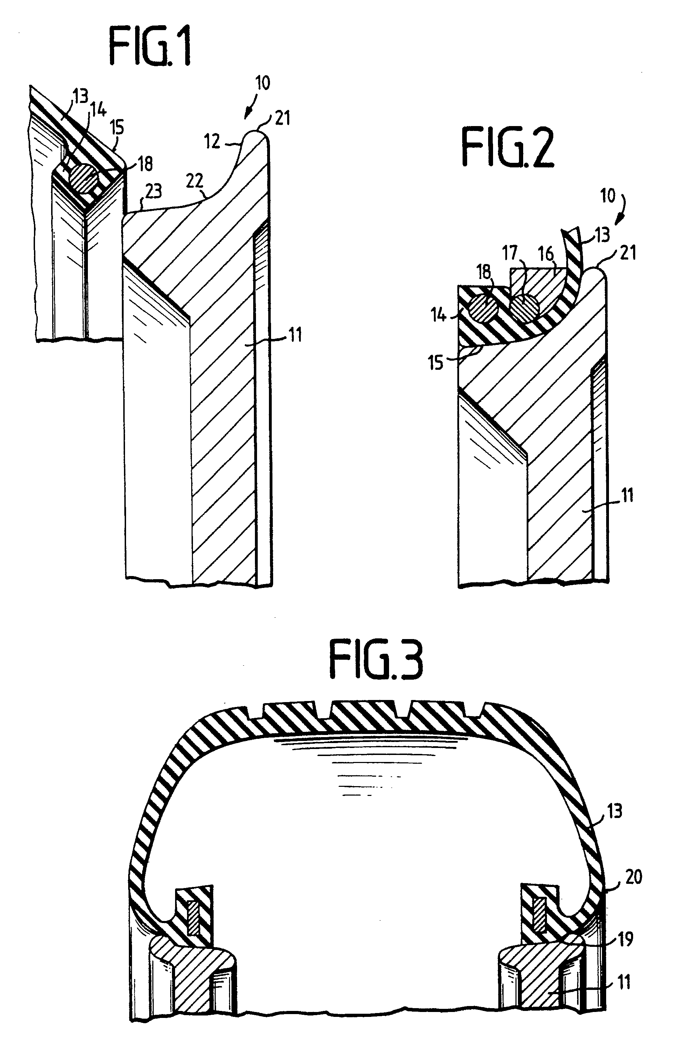

Die in der Fig. 1 dargestellte Prüfvorrichtung 10 besteht im wesentlichen aus einer zweigeteilten Prüffelge 11, deren Hälften axial gegeneinander verfahrbar sind. Die Felgenhörner 21 der Prüffelge 11 liegen im Bereich der Wulstsitze 15 radial-axial außen an den Seitenwänden 20 an. Sie weisen Wulstsitzflächen 22 auf, die in ein Felgenbett 23 übergehen. Die Kontur der Prüffelge 11 im Bereich der Wulstsitze 22 ist dabei der Heizformkontur 12 des zu prüfenden Reifens 13 angepaßt.

Während herkömmliche Reifen mit ihren Wülsten im Bereich der Felgenhörner zur Anlage an die von außen herangefahrenen Hälften der Prüffelge 11 gebracht werden, müssen bei den vorliegenden Reifen 11, die mit ihren Wülsten 14 radial innen mit einer Felge in Wirkverbindung gebracht sind, die Seitenwände 20 des zu prüfenden Reifens 13 nach innen umgelegt werden, so daß dessen Außenseiten radial nach innen weisen.

Bei der vorliegenden Prüfvorrichtung 10 werden diese Außenseiten mit Wulstsitzflächen 15 der zusammenfahrgefahrenen Prüffelge 11 in Wirkverbindung gebracht. Damit der Reifen 13 in einer stabilen Lage auf der Prüffelge 11 gehalten werden kann, sind Formringe 16 vorgesehen, die in die Innenräume zwischen den Wülsten 14 und den Seitenwänden 20 eingelegt werden können.

Anstelle der Formringe 16 können auch Segmente eingesetzt werden, die, wie beispielsweise in der DE-OS 35 41 188 beschrieben ist, an Führungen radial verschiebbar sind, und die automatisch in diese Zwischenräume eingefahren werden können. Diese Formringe 16 können Drahtkerne 17 enthalten, die einen sicheren Sitz und eine stabile Lage des Reifens auf der Prüffelge 11 gewährleisten. Die Drahtkerne 17 entsprechen in ihren Durchmessern den Wulstkernen 18.

Bei der in der Fig. 3 dargestellten Ausführungsform sind die Wülste 14 mit in Montagestellung radial nach innen weisenden Wulstansätzen 19 versehen, die einen sicheren Sitz auf den Wulstsitzen 22 der Prüffelge 11 gewährleisten sollen. Eine derartige Prüffelge 11 kann in herkömmlicher Art axial von außen gegen den zu prüfenden Reifen 11 gefahren werden und dabei die Seitenwände 20 aus ihrer trapezförmigen Heizform in die nach innen umgelegte Montageposition verschieben. In dieser Position können die Reifen 11 geprüft, harmonisiert, geraut oder inspiziert werden. Bei einer weiteren Ausführungsform ist die Prüffelge expandierbar ausgebildet, wobei der Innenraum der Prüffelge 11 mit an sich bekannten Gummimanschetten abgedichtet ist.

## Patentansprüche

1. Verfahren zur Reifenaufnahme, insbesondere zur Messung des Rundlaufs bei einem Fahrzeugluftreifen (13), der im Betriebszustand mit seinen Wülsten (14) am radial inneren Umfang einer Felge befestigt ist, mit einer Pröffelge (11), die einen zu prüfenden Reifen (13) an dessen axial außen liegenden Wulstzonen aufnimmt, wobei der Innenraum zwischen den Wülsten (14) und den benachbarten Seitenwänden (20) durch einlegbare Haltemittel (16) ausgefüllt wird.

2. Vorrichtung zur Durchführung des Verfahrens nach Anspruch 1, dadurch gekennzeichnet, daß die Pröffelge (11) eine Heizformkontur (12) zur Aufnahme der axial außenliegenden Wulstsitzflächen (15) des Reifens (13) aufweist und in die den Wulstsitzflächen (15) zugeordneten Wulstinnenräumen (20) Formringe (16) eingelegt sind.

3. Vorrichtung nach Anspruch 2, dadurch gekennzeichnet, daß die Formringe (16) segmentiert sind, wobei die in den Reifen (13) eingelegten rechten und linken Formringe (16) miteinander verbunden und radial bewegbar sind.

4. Vorrichtung nach den Ansprüchen 2 und 3, dadurch gekennzeichnet, daß in die Wulstinnenräume (20) Drahtkerne (17) eingelegt sind.

5. Vorrichtung nach den Ansprüchen 2 bis 4, dadurch gekennzeichnet, daß die Wulstsitzflächen (15) mit Wulstansätzen (19) versehen sind und die Wulstansätze (19) der Heizformkontur (12) der Prüffelge (11) entsprechen.

6. Vorrichtung nach den Ansprüchen 2 bis 5, dadurch gekennzeichnet, daß die Prüffelge (11) expandierbar ausgeführt ist.

7. Vorrichtung nach den Ansprüchen 2 bis 6, dadurch gekennzeichnet, daß die Kontur der Formringe (16) der Innenkontur zwischen den Wülsten (14) und den Seitenwänden (20) des zu prüfenden Reifens (13) entspricht.

8. Vorrichtung nach den Ansprüchen 2 bis 7, dadurch gekennzeichnet, daß der Innenraum der Prüffelge (11) mit an sich bekannten Gummimanschetten abgedichtet ist.

## Claims

1. Method for tyre mounting, in particular for measuring the concentricity of a pneumatic vehicle tyre (13), which is secured, in the operational state, by its beads (14) on the radially internal circumference of a rim, having a test rim (11), which receives a tyre (13) to be tested at its axially external bead zones, the interior space between the beads (14) and the adjacent lateral walls (20) being filled with insertable retaining means (16).

2. Apparatus for implementing the method according to claim 1, characterised in that the test rim (11) has a hot-moulded configuration (12) for receiving the axially external bead seating surfaces (15) of the tyre (13), and moulded rings (16) are inserted into the bead interiors (20) associated with the bead seating surfaces (15).

3. Apparatus according to claim 2, characterised in that the moulded rings (16) are segmented, the right-hand and left-hand moulded rings (16), which are inserted into the tyre (13), being interconnected and radially displaceable.

4. Apparatus according to claims 2 and 3, characterised in that wire cores (17) are inserted into the bead interiors (20).

5. Apparatus according to claims 2 to 4, characterised in that the bead seating surfaces (15) are provided with bead extension members (19), and the bead extension members (19) correspond to the hot-moulded configuration (12) of the test rim (11).

6. Apparatus according to claims 2 to 5, characterised in that the test rim (11) is adapted to be expandable.

7. Apparatus according to claims 2 to 6, characterised in that the configuration of the moulded rings (16) corresponds to the internal configuration between the beads (14) and the lateral walls (20) of the tyre (13) to be tested.

8. Apparatus according to claims 2 to 7, characterised in that the interior of the test rim (11) is sealed with rubber sleeves, which are known per se.

**Revendications**

1. Procédé pour positionner un pneu, notamment pour mesurer la rotation concentrique d'un pneu (13) de véhicule automobile qui, en fonctionnement, est fixé par ses talons (14) sur le pourtour radialement intérieur d'une jante, avec une jante d'essai (11) qui loge un pneu (13) à vérifier sur ses zones de talon situées axialement à l'extérieur, l'espace intérieur compris entre les talons (14) et les parois latérales (20) adjacentes étant rempli par des moyens de maintien (16) à insérer.

2. Dispositif pour la mise en oeuvre du procédé selon la revendication 1, caractérisé en ce que la jante d'essai (11) présente un contour de moule chauffant (12) destiné à loger les surfaces de siège de talon (15) du pneu (13) et en ce que des anneaux moulés (16) sont placés dans les espaces intérieurs de talon (20) associés aux surfaces de siège de talon (15).

3. Dispositif selon la revendication 2, caractérisé en ce que les anneaux moulés (16) sont segmentés, les anneaux (16) droit et gauche placés dans le pneu (13) étant reliés entre eux et mobiles radialement.

4. Dispositif selon les revendications 2 et 3, caractérisé en ce que des noyaux en fil (17) sont placés dans les espaces intérieurs de talon (20).

5. Dispositif selon les revendications 2 à 4, caractérisé en ce que les surfaces de siège de talon (15) sont pourvues d'appendices (19) et les appendices (19) correspondent au contour de moule chauffant (12) de la jante d'essai (11).

6. Dispositif selon les revendications 2 à 5, caractérisé en ce que la jante d'essai (11) peut être expansée.

7. Dispositif selon les revendications 2 à 6, caractérisé en ce que le contour des anneaux (16) correspond au contour intérieur entre les talons (14) et les parois latérales (20) du pneu (13) à vérifier.

8. Dispositif selon les revendications 2 à 7, caractérisé en ce que l'espace intérieur de la jante d'essai (11) est rendu étanche par des manchons en caoutchouc connus.

# FIG.1

# FIG.2

# FIG.3